(19) Europäisches Patentamt
European Patent Office
Office européen des brevets

(11) **EP 4 336 784 A1**

(12) **EUROPEAN PATENT APPLICATION**
published in accordance with Art. 153(4) EPC

(43) Date of publication:
**13.03.2024 Bulletin 2024/11**

(21) Application number: **22798919.1**

(22) Date of filing: **28.04.2022**

(51) International Patent Classification (IPC):
**H04L 12/28** (2006.01)

(52) Cooperative Patent Classification (CPC):
**H04L 12/28**

(86) International application number:
**PCT/JP2022/019291**

(87) International publication number:
**WO 2022/234814 (10.11.2022 Gazette 2022/45)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **07.05.2021 CN 202110495536**
**21.02.2022 CN 202210157646**

(71) Applicant: **DAIKIN INDUSTRIES, LTD.**
**Osaka-Shi, Osaka 530-0001 (JP)**

(72) Inventors:
• **PAN, Si**
**Osaka-shi, Osaka 530-0001 (JP)**
• **GAN, Quan**
**Osaka-shi, Osaka 530-0001 (JP)**

(74) Representative: **Global IP Europe**
**Patentanwaltskanzlei**
**Pfarrstraße 14**
**80538 München (DE)**

(54) **METHOD AND APPARATUS FOR CONTROLLING ENVIRONMENT ADJUSTING APPARATUS, AND INTELLIGENT ENVIRONMENT ADJUSTING SYSTEM**

(57) The present invention provides a control method and device for an environment adjustment device, and an intelligent environment adjustment system. The environment state of an entire space is accurately reflected based on environment parameters collected at limited positions, and accurate environment parameters corresponding to the positions of the plurality of users can be easily acquired, whereby an environment parameter distribution of the entire space can be acquired at a low cost and applied to many large spatial areas; a target parameter distribution of the environment adjustment device is acquired by using a first prediction model from the state parameter overall value reflecting the overall state of the plurality of users, whereby the target parameter distribution can be accurately adapted to the plurality of users as a whole; and the deviation between an actual setting and an ideal setting can be reduced while the plurality of users can all be in a comfortable state, thereby improving the performance of the device and user experience.

FIG. 1

## Description

### TECHNICAL FIELD

The present invention relates to the field of environment adjustment devices, and in particular to a control method and device for an environment adjustment device and an intelligent environment adjustment system.

### BACKGROUND ART

As the levels of economy improves, the intelligence of an "environment adjustment device" has become a research direction in the industry. People's demands with respect to living in an indoor environment are increasing. For example, the demand for air conditioning in a large area or an office area is not limited to the simple cooling and heating function, but includes the pursuit of a more comfortable, healthy, and less fatiguing indoor environment. In particular, an office environment desired is an environment that enables energy-saving and can improve work efficiency while maintaining the quality and comfort level of the indoor environment.

Desensitization control is a technology that has been studied in recent years and is gaining attention, wherein, during execution of an intelligent environment adjustment system, the involvement of the hand of man is reduced as much as possible, and the habits of use and preferences of a user are automatically captured by the system so as to finally reach the goal of integrating the human and a home system.

PTL 1 discloses a desensitization control method for air-conditioning temperature based on online learning whereby the indoor air temperature is intelligently controlled and the needs of the user for an optimal comfort level are satisfied by: building a human body thermal comfort level prediction model for an individual user; obtaining an optimal indoor air temperature prediction model by solving the prediction model; using an online learning scheme to collect recent historical data recorded by an intelligent environment adjustment system; continuously fitting the prediction model; adjusting model parameters; predicting an optimal indoor air temperature that meets the preference of the individual user in different time periods; and achieving non-inductive control with respect to the air-conditioning temperature using the optimal indoor air temperature as a setting value of the air-conditioning temperature.

### CITATION LIST

### PATENT LITERATURE

PTL 1: CN111486554A

It should be noted that the foregoing introduction to the technical background is merely provided to facilitate a clear and complete description of the technical solutions of the present invention, and also to facilitate an understanding by those skilled in the art. The solutions being mentioned in the background of the present invention do not by itself suggest that the above technical solutions are known to those skilled in the art.

### SUMMARY OF THE INVENTION

However, the present inventors have found that PTL 1 that is a technique according to the related art has the following problems.

The method can only meet the preference of an individual user in a small spatial area, and cannot ensure the comfort level for a plurality of users in a large-scale area where there are many users and a lot of traffic.

While the optimal indoor temperature value output by the method is a final target value and belongs to an ideal indoor temperature value, there is a difference between the actual indoor temperature and the ideal indoor temperature due to factors such as air-conditioning characteristics and construction; therefore, if the ideal indoor temperature value is used as a control value in actual adjustment, the comfort level decreases.

When the area of the indoor space is large, because the air-conditioning control is only performed based on the data collected by a single temperature/humidity sensor or by temperature/humidity sensors with a non-uniform distribution, the temperature/humidity distribution situation of the entire space cannot be accurately reflected, making it difficult for the users in the indoor space as a whole to be in a comfortable state.

The actual temperature distribution of the indoor temperature is uneven, and since there is no comprehensive analysis of the accurate indoor temperature distribution, the comfort level adjusted by the corresponding air conditioning is inaccurate.

The ambient temperature of a person and the distribution of the indoor temperature both vary at different times every day, and a user state optimized for all weathers cannot be obtained.

In order to solve at least one of the above problems, examples of the present invention provide a control method and device for an environment adjustment device and an intelligent environment adjustment system, wherein an environment parameter distribution model is determined based on a plurality of environment parameters at different positions. In an example of the present invention, environment parameters corresponding to the positions of a plurality of users are determined based on the environment parameter distribution model, the environment state of the entire space is accurately reflected based on the environment parameters collected at the limited positions, and accurate environment parameters corresponding to the positions of the plurality of users can be easily acquired, so that an environment parameter distribution of the entire space is acquired at a low cost. Examples of the present invention can be applied to many large spatial areas, such as schools, office places, department stores, schools, exhibition areas, or multifunctional halls, and can also be applied to homes. In an example of the present invention, respective state parameters of a plurality of users are calculated based on accurate environment parameters corresponding to the positions of the plurality of users, and a state parameter overall value of the users is determined based on the state parameters of the plurality of users, so that the state parameter overall value reflects an overall state of the plurality of users. In an example of the present invention, a target parameter distribution of the environment adjustment device is acquired by using a first prediction model from the state parameter overall value reflecting the overall state of the plurality of users, whereby the target parameter distribution can be accurately adapted to the plurality of users as a whole. In an example of the present invention, a device is controlled based on the target parameter distribution, so that the plurality of users can all be in a comfortable state, thereby improving the performance of the device and user experience.

According to a first aspect of an example of the present invention, there is provided a control method for an environment adjustment device, the method including: acquiring a plurality of environment parameters at different positions in a room; determining an environment parameter distribution model based on the plurality of environment parameters at the different positions; determining a plurality of environment parameters corresponding to located positions of a plurality of users based on the environment parameter distribution model; calculating respective state parameters of the plurality of users based on the plurality of environment parameters corresponding to the located positions of the plurality of users, and determining a state parameter overall value of the users based on the state parameters of the plurality of users; and inputting the state parameter overall value into a first prediction model and outputting a target parameter distribution of the environment adjustment device.

According to a second aspect of an example of the present invention, there is provided a control device for an environment adjustment device, including: an acquisition unit that acquires a plurality of environment parameters at different positions in a room; a first determination unit that determines an environment parameter distribution model based on the plurality of environment parameters at the different positions; a second determination unit that determines a plurality of environment parameters corresponding to located positions of a plurality of users based on the environment parameter distribution model; a third determination unit that calculates respective state parameters of the plurality of users based on the plurality of environment parameters corresponding to the located positions of the plurality of users, and determines a state parameter overall value of the users based on the state parameters of the plurality of users; and a fourth determination unit that inputs the state parameter overall value into a first prediction model and outputs a target parameter distribution of the environment adjustment device.

According to a third aspect of an example of the present invention, there is provided an intelligent environment adjustment system including: an environment adjustment device that regulates an indoor environment; and the control device for an environment adjustment device according to the second aspect of the example of the present invention, the control device controlling the environment adjustment device.

One of the beneficial effects of the examples of the present invention is as follows. An environment parameter distribution model is determined based on a plurality of environment parameters at different positions, environment parameters corresponding to the positions of a plurality of users are determined based on the environment parameter distribution model, an environment state of an entire space is accurately reflected based on the environment parameters collected at the limited positions, and accurate environment parameters corresponding to the positions of the plurality of users can be easily acquired. In this way, an environment parameter distribution of an entire space can be acquired at a low cost and applied to many large spatial areas such as schools, office places, department stores, schools, exhibition areas, or multi-functional halls, and can also be applied to homes.

Then, respective state parameters of the plurality of users are calculated based on the accurate environment parameters corresponding to the positions of the plurality of users, and a state parameter overall value of the users is determined based on the state parameters of the plurality of users, so that the state parameter overall value reflects an overall state of the plurality of users.

Further, a target parameter distribution of the environment adjustment device is acquired by using a first prediction model from the state parameter overall value reflecting the overall state of the plurality of users, whereby the target parameter distribution can be accurately adapted to the plurality of users as a whole. By controlling the device based on the target parameter distribution, the deviation between an actual setting and an ideal setting can be reduced while the plurality of users can all be in a comfortable state, thereby improving the performance of the device and user experience.

With reference to the following description and drawings, specific embodiments of the present invention are disclosed in detail, and the ways in which the principles of the present invention may be employed are set forth. It should be understood that the embodiments of the present invention are not limited in scope. Many modifications, corrections, and equivalents are included in the embodiments of the present invention within the spirit and scope of the appended claims.

Characteristic information described and illustrated with respect to one embodiment may be used in one or more other embodiments in the same or similar form, may be combined with characteristic information in other embodiments, or may replace characteristic information in other embodiments.

It should be emphasized that while the term "comprise/include" as used herein indicates the presence of characteristic information, an element, a step, or an assembly, it does not preclude the presence or addition of one or more other characteristic information, elements, steps, or assemblies.

## BRIEF DESCRIPTION OF THE DRAWINGS

Many aspects of the present invention can be better understood with reference to the following drawings. The members in the figures are not necessarily to scale. The members are only shown to illustrate the principles of the present invention. To facilitate the illustration and description of some parts of the present invention, corresponding parts may be enlarged or reduced in size in the drawings. Elements and characteristic information described in one drawing or one embodiment of the present invention can be combined with elements and characteristic information shown in one or more other drawings or embodiments. Moreover, in the drawings, like reference numerals indicate corresponding members throughout several views, and may be used to designate corresponding members in one or more embodiments. In the drawings:

Fig. 1 is a flowchart of a control method for an environment adjustment device according to Example 1 of the present invention.
Fig. 2 is a flowchart of a method for implementing step 101 according to Example 1 of the present invention.
Fig. 3 is another flowchart of a method for implementing step 101 according to Example 1 of the present invention.
Fig. 4 is a flowchart of a method for implementing step 102 according to Example 1 of the present invention.
Fig. 5 is a flowchart of a method for implementing step 103 according to Example 1 of the present invention.
Fig. 6 is a flowchart of a method for implementing step 104 according to Example 1 of the present invention.
Fig. 7 is a flowchart of another method for implementing step 106 according to Example 1 of the present invention.
Fig. 8 is a schematic diagram of a data processing process of the control method for an environment adjustment device according to Example 1 of the present invention.
Fig. 9 is a flowchart of an air-conditioning control method according to Example 1 of the present invention.
Fig. 10 is another flowchart of the control method for the environment adjustment device according to Example 1 of the present invention.
Fig. 11 is a schematic diagram of a corresponding relationship between a state parameter overall value and a target parameter distribution according to Example 1 of the present invention.
Fig. 12 is a schematic diagram of a control device for an environment adjustment device according to Example 2 of the present invention.
Fig. 13 is a structural diagram of an intelligent environment adjustment system according to Example 3 of the present invention.

## DESCRIPTION OF EMBODIMENTS

Hereinafter, preferred embodiments of the present invention will be described with reference to the accompanying drawings.

Example 1

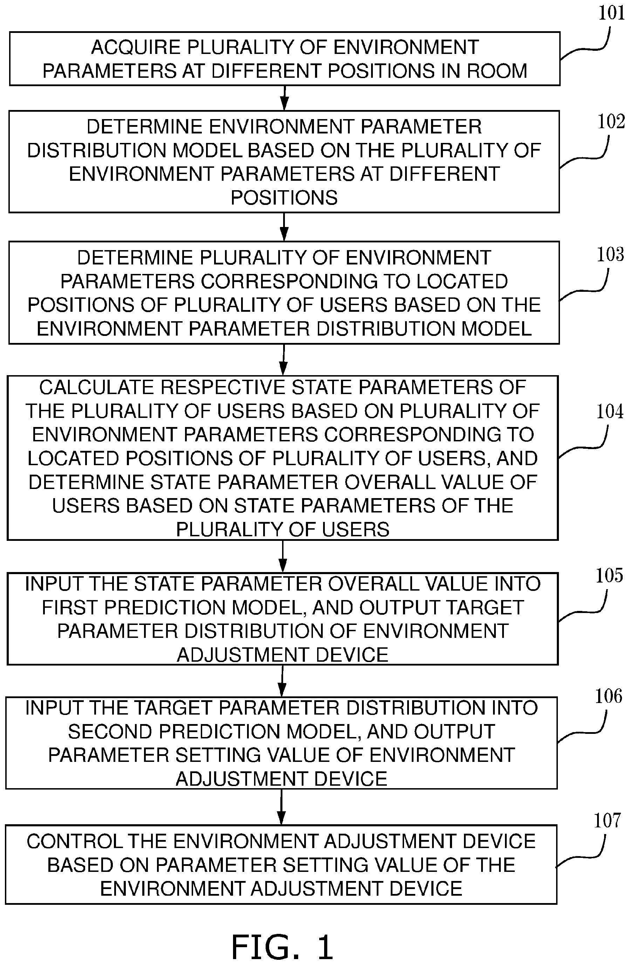

Example 1 of the present invention provides a control method for an environment adjustment device. Fig. 1 is a flowchart of the control method for an environment adjustment device according to Example 1 of the present invention. As shown in Fig. 1, the method includes:

a step 101 of acquiring a plurality of environment parameters at different positions in a room;
a step 102 of determining an environment parameter distribution model based on the plurality of environment parameters at the different positions;
a step 103 of determining a plurality of environment parameters corresponding to located positions of a plurality of users based on the environment parameter distribution model;

a step 104 of calculating respective state parameters of the plurality of users based on the plurality of environment parameters corresponding to the located positions of the plurality of users, and determining a state parameter overall value of the users based on the state parameters of the plurality of users; and

a step 105 of inputting the state parameter overall value into a first prediction model, and outputting a target parameter distribution of the environment adjustment device.

After the target parameter distribution of the environment adjustment device is acquired in step 105, the environment adjustment device can be controlled based on the target parameter distribution of the environment adjustment device.

Thus, an environment parameter distribution model is determined based on a plurality of environment parameters at different positions, environment parameters corresponding to the positions of a plurality of users are determined based on the environment parameter distribution model, and the environment state of the entire space is accurately reflected based on the environment parameters collected at the limited positions, so that accurate environment parameters corresponding to the positions of the plurality of users can be easily acquired. Accordingly, the environment parameter distribution of the entire space can be acquired at a low cost and applied to many large spatial areas such as schools, office places, department stores, schools, exhibition areas, or multi-functional halls, and can also be applied to homes. Respective state parameters of the plurality of users are calculated based on the accurate environment parameters corresponding to the positions of the plurality of users, and the state parameter overall value of the users is determined based on the state parameters of the plurality of users, so that the state parameter overall value reflects the overall state of the plurality of users. The target parameter distribution of the environment adjustment device is acquired by using a first prediction model from a state parameter overall value reflecting the overall state of the plurality of users, whereby the target parameter distribution can be accurately adapted to the plurality of users as a whole. The device is controlled based on the target parameter distribution, whereby the plurality of users can all be in a comfortable state, thereby improving the performance of the device and user experience.

In the example of the present invention, the environment adjustment device may be various types of environment adjustment devices. For example, the environment adjustment device is at least one of an air conditioner, an air purifier, a fresh air device, a humidifier, a disinfector, a lighting device, and an acoustic device.

In the example of the present invention, the environment adjustment device may be used for homes, or for commercial or public use.

For example, the environment adjustment device may be used in a home environment, a commercial environment such as an office, an office building, and a department store, or a public environment such as a school.

In the example of the present invention, an air conditioner is exemplarily described by way of example. The air conditioner may be a separate type or a multi-type air conditioner, or may be a central air-conditioning system.

In the example of the present invention, the environment parameter may be various parameters characterizing the indoor environment. For example, the environment parameter includes at least one of temperature, humidity, wind direction, air volume, sound volume, audio frequency, luminance, color temperature, and air quality. Here, the air quality includes, for example, an oxygen content, a PM2.5 content, a PM10 content, and a toxic gas (e.g., VOC) content.

In addition, the environment parameter may further include a physiological parameter of the user, such as a sensible temperature and a heart rate. For example, if the sensible temperature of the user is higher than a normal value, a reminder or an early warning is issued.

In step 101, the plurality of environment parameters at the different positions in the room may be acquired by a plurality of sensors, or may be acquired by a single movable sensor.

For example, the plurality of environment parameters at the different positions are acquired from a plurality of sensors distributed at different positions in the room, wherein the plurality of sensors may be randomly distributed in the room, or the plurality of environment parameters at the different positions are acquired from a sensor movable in the room.

In the example of the present invention, one type of environment parameter may be acquired or a plurality of types of environment parameters may also be acquired, and, with respect to an air conditioner, for example, a plurality of temperatures and humidities at different positions in a room are acquired.

If a plurality of types of environment parameters needs to be acquired, sensors for collecting corresponding parameters may be provided, and, for example, a plurality of temperature sensors and a plurality of humidity sensors are disposed at different positions in the room.

In the example of the present invention, the environment parameter that needs to be acquired is related to a parameter that needs to be set or adjusted for the environment adjustment device, and, for example, if the temperature and humidity of the air conditioner need to be set, the temperature and humidity may be collected.

Which parameter needs to be set or adjusted by the environment adjustment device may be determined according to the object to be adjusted. For example, if the human comfort level is the main concern, the setting of the air conditioner is mainly the setting of temperature, and if the human fatigue level is the main concern, the setting of the air conditioner is mainly the setting of humidity.

For example, in the case of a central air-conditioning system, with respect to a refrigerant system device, the system may be such that one indoor unit is attached to one outdoor unit, a plurality of indoor units are attached to one outdoor unit, or a plurality of indoor units are attached to a plurality of outdoor units, in which cases the temperature, humidity, air volume, and air speed can be separately adjusted or preferentially adjusted; or, with respect to a water system device, the system may be such that a plurality of ventilation openings are attached to a single outdoor unit, in which case the total temperature and the air volume of the individual ventilation openings can be preferentially adjusted without adjusting the humidity.

In the example of the present invention, the data collected by the sensor may be collected by various schemes. Hereinafter, acquisition of temperature and humidity will be described by way of example.

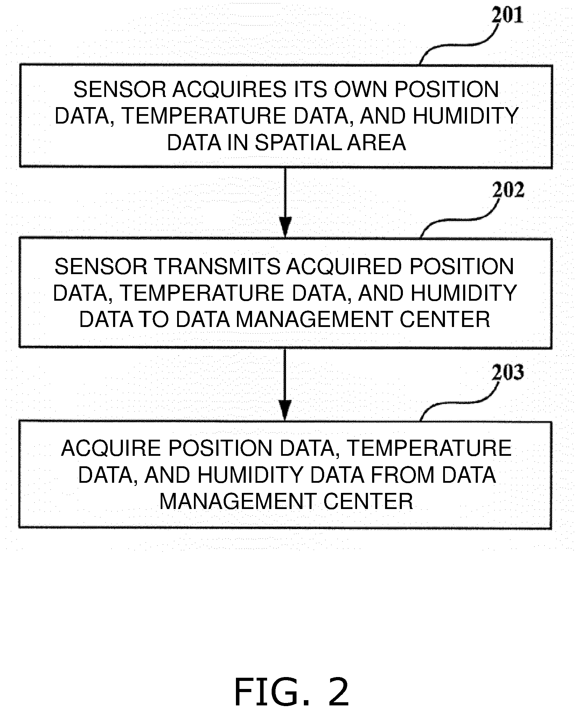

Fig. 2 is a flowchart of a method for implementing step 101 according to Example 1 of the present invention. As shown in Fig. 2, the method includes:

a step 201 of a sensor acquiring position data, temperature data, and humidity data thereof in a spatial area;
a step 202 of the sensor transmitting the acquired position data, temperature data, and humidity data to a data management center; and
a step 203 of acquiring position data, temperature data, and humidity data from a data management center.

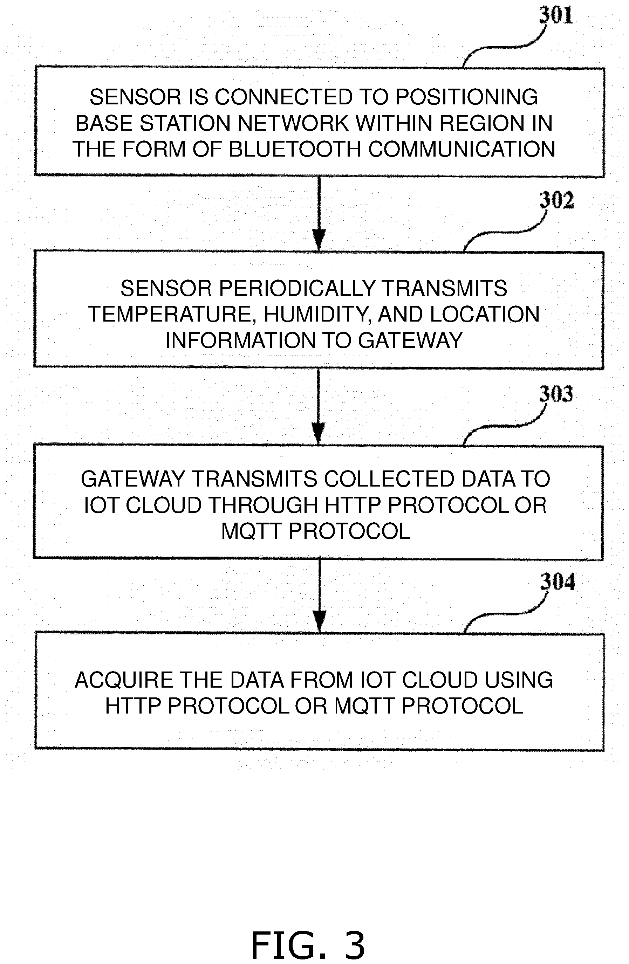

Fig. 3 is another flowchart of a method for implementing step 101 according to Example 1 of the present invention. As shown in Fig. 3, the method includes:

a step 301 of a sensor being connected to a positioning base station network in the area in the form of Bluetooth communication (Bluetooth is a registered trademark);
a step 302 of the sensor periodically transmitting temperature, humidity, and position information to a gateway;
a step 303 of the gateway transmitting the collected data to an IOT cloud through an HTTP protocol or an MQTT protocol; and
a step 304 of acquiring the above data from the IOT cloud via the HTTP protocol or the MQTT protocol.

As shown in Fig. 1, after a plurality of environment parameters at the different positions are acquired, an environment parameter distribution model is determined in step 102 based on the plurality of environment parameters at the different positions.

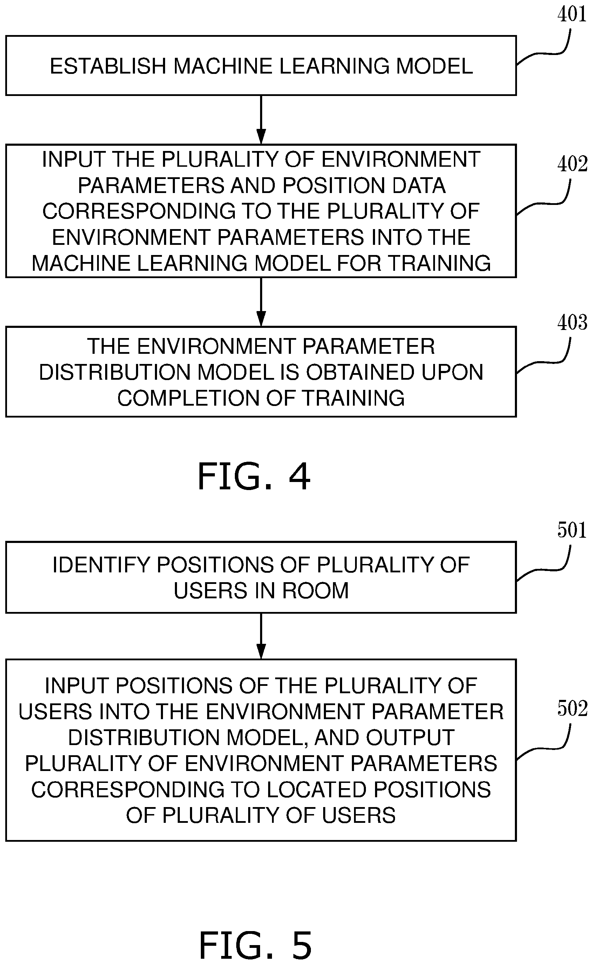

Fig. 4 is a flowchart of a method for implementing step 102 according to Example 1 of the present invention. As shown in Fig. 4, the method includes:

a step 401 of establishing a machine learning model;
a step 402 of inputting the plurality of environment parameters and position data corresponding to the plurality of environment parameters into the machine learning model for training; and
a step 403 of obtaining the environment parameter distribution model upon completion of training.

In the example of the present invention, the machine learning model may be various types of machine learning models, such as, a Support Vector Machine (SVM) regression model or a model based on a neural network.

The process of training using the data collected in step 402 is also a process of fitting.

In the example of the present invention, different environment parameter distribution models may be acquired based on different types of environment parameters. Corresponding to the acquired environment parameters, the environment parameter distribution model may include at least one of a temperature distribution model, a humidity distribution model, a wind direction distribution model, an air volume distribution model, a sound volume distribution model, an audio frequency distribution model, a luminance distribution model, a color temperature distribution model, and an air quality distribution model.

For example, when the environment parameters include temperature and humidity, a temperature distribution model and a humidity distribution model are acquired.

As shown in Fig. 1, after the environment parameter distribution model is determined, in step 103, a plurality of environment parameters corresponding to the located positions of the plurality of users are determined based on the environment parameter distribution model. Fig. 5 is a flowchart of a method for implementing step 103 according to Example 1 of the present invention. As shown in Fig. 5, the method includes:

a step 501 of determine the positions of a plurality of users in the room; and
a step 502 of inputting the located positions of the plurality of users into the environment parameter distribution model, and outputting a plurality of environment parameters corresponding to the located positions of the plurality of users.

In the example of the present invention, the positions of the plurality of users in the room may be determined by various methods.

For example, the positions of the plurality of users in the room are identified by detecting an image captured by an indoor camera, or the positions of the plurality of users in the room are identified by emitting an ultrasonic signal, a radar signal, or an infrared signal into the room, or the positions of the plurality of users in the room are identified by detecting a wireless signal transmitted from terminals carried by the plurality of users in the room.

For the process of determining the positions of the users by using the above methods, reference may be made to the related art and will not be elaborated herein.

In the example of the present invention, the positions of the plurality of users may be two dimensional positions not including a height, or three dimensional positions including a height. For example, the positions of the plurality of users are represented by two dimensional coordinates f(x, y) or three dimensional coordinates f(x, y, z).

When the positions of the plurality of users are three dimensional positions including a height, it is taken into consideration that the height may differ due to differences in height or sitting manners of the users. For example, not only the comfort level of a body part of the user can be ensured, but also it can be ensured that the head of the user is in a comfortable state, whereby the comfort level of the user can be maximized, the overall comfort level of the users in the area can be improved, and their fatigue level can be reduced. The height may be set to a fixed value by a user command. For example, the height is 1.5 meters, that is, temperature data and humidity data at the located positions of the users on a horizontal plane at a height of 1.5 meters only needs to be acquired.

In the example of the present invention, the positions of the plurality of users may include positions of the plurality of users themselves and positions around the plurality of users. Thus, since the positions around the users are included, the data of the environment parameter obtained based on the position data can be made more complete, and the comfort level of the users after the control can be further improved.

In step 502, the positions of the plurality of users are input into the environment parameter distribution model, and a plurality of environment parameters corresponding to the positions of the located plurality of users are output; that is, the positions and the environment parameters have a specific corresponding relationship in the environment parameter distribution model, so that the plurality of environment parameters corresponding to the located positions of the plurality of users can be acquired based on the positions of the plurality of users.

As shown in Fig. 1, after the plurality of environment parameters corresponding to the located positions of the plurality of users, in step 104, respective state parameters of the plurality of users are calculated based on the plurality of environment parameters corresponding to the located positions of the plurality of users, and a state parameter overall value of the users is determined based on the state parameters of the plurality of users.

In the example of the present invention, the state parameters of the users may be various parameters for representing the state of the user, for example, a comfort level and a fatigue level.

Hereinafter, calculation of the comfort level and the fatigue level of the user based on temperature and humidity will be described by way of example.

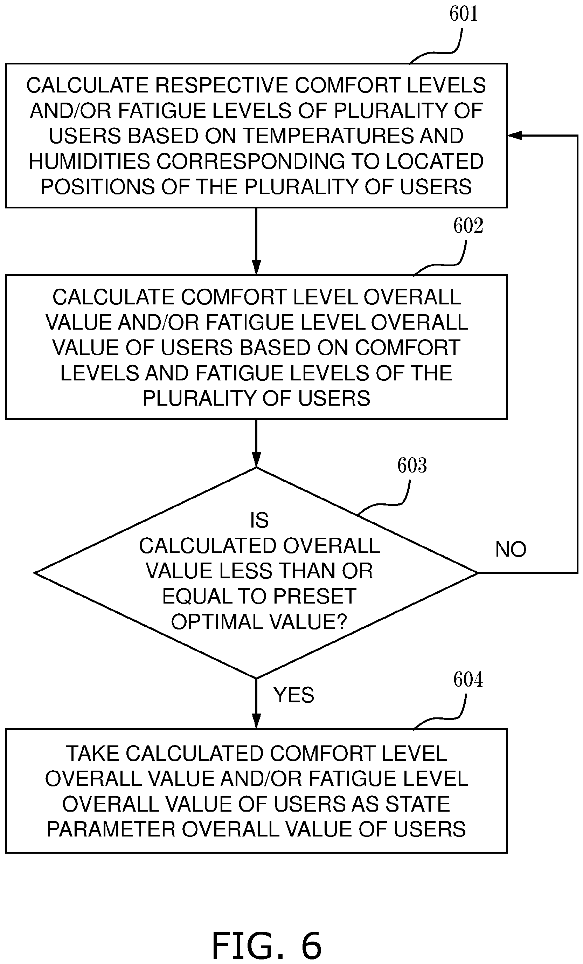

Fig. 6 is a flowchart of a method for implementing step 104 according to Example 1 of the present invention. As shown in Fig. 6, the method includes:

a step 601 of calculating respective comfort levels and/or fatigue levels of the plurality of users based on the temperatures and humidities corresponding to the located positions of the plurality of users; and
a step 602 of calculating a comfort level overall value and/or a fatigue level overall value of the users based on the comfort levels and the fatigue levels of the plurality of users.

In the example of the present invention, the calculation of the comfort level and/or the fatigue level of the user based on the temperature and humidity may be acquired by using a model.

In step 601, for example, a multi-layer perceptron regression model is trained based on temperature and humidity training data, and the comfort level and/or the fatigue level of the user is output. In addition, the model may be trained based on the gender of the user, so that the comfort level and/or the fatigue level of users with different genders can be acquired by applying the model.

In step 602, for example, a sum, an average value, a variance, or a standard deviation of the comfort levels of the plurality of users is calculated, and/or a sum, an average value, a variance, or a standard deviation of the fatigue levels of the plurality of users is calculated, to obtain a comfort level overall value and/or a fatigue level overall value of the users.

In the example of the present invention, the comfort level overall value and/or the fatigue level overall value that has been calculated based on a desired result may be selected.

For example, if the comfort level and the fatigue level in the entire area as a whole are desired, an overall value is calculated by adding the respective comfort levels and fatigue levels of all the users. If the overall value is small, this indicates that the comfort level and the fatigue level of all the users in the entire area are generally small, that is, the comfort level is high and the fatigue level is low; and if the overall value is large, this indicates that the comfort level and the fatigue level of all the users in the entire area are generally large, that is, the comfort level is low and the fatigue level is high.

For example, the comfort levels and the fatigue levels of all the users may be added based on expressions (1) and (2) below to obtain the comfort level overall value and the fatigue level overall value.

$$f_{f\_sum} = \sum_{n=1}^{N} (feeling_n) \tag{1}$$

$$f_{t\_sum} = \sum_{n=1}^{N} (tiredness_n) \tag{2}$$

Here, $f_{f\_sum}$ indicates that the comfort level overall value is the sum of the comfort levels of the users, *feeling* indicates the comfort level of each user, $f_{t\_sum}$ indicates that the fatigue level overall value is the sum of the fatigue levels of the users, *tiredness* indicates the fatigue level of each user, and N is the number of the users.

For example, if the balance situation between the comfort level and the fatigue level in the entire area as a whole is desired, the overall value is calculated by determining respective average values with respect to the comfort level and fatigue level of all the users. If the overall value is small, this indicates that the balance is small for both the comfort level and the fatigue level of all the users in the entire area, and the influence of particularly small data is not excluded. If the overall value is large, this indicates that the balance is large for both the comfort level and the fatigue level of all the users in the entire area, and the influence of particularly large data is not excluded.

For example, average values of the comfort levels and the fatigue levels of all the users may be obtained based on expressions (3) and (4) below, and used as the comfort level overall value and the fatigue level overall value.

$$f_{f\_average} = \frac{1}{N} \sum_{n=1}^{N} (feeling_n) \tag{3}$$

$$f_{t\_average} = \frac{1}{N} \sum_{n=1}^{N} (tiredness_n) \tag{4}$$

Here, $f_{f\_average}$ indicates that the comfort level overall value is an average value of the comfort levels of the users, *feeling* indicates the comfort level of each user, $f_{t\_average}$ indicates that the fatigue level overall value is an average value of the fatigue levels of the users, *tiredness* indicates the fatigue level of each user, and N is the number of the users.

For example, if the degree of variance of the comfort levels and fatigue levels of the users in the area are desired, that is, the degree of difference in comfort level and fatigue level between the users, the method of calculating the overall value is to obtain respective variances or standard deviations with respect to the comfort level and fatigue level of all the users. If the overall value is small, this indicates that the difference in comfort level and fatigue level between the users in the area is not large. If the overall value is large, this indicates that the comfort levels and fatigue levels of the users in the area vary greatly.

For example, the variance may be determined with respect to the comfort levels and fatigue levels of all the users based on expressions (5) and (6) below, to obtain a comfort level overall value and a fatigue level overall value.

$$f_{f\_var} = \frac{1}{N} \sum_{n=1}^{N} (feeling_n - f_{f\_average})^2 \tag{5}$$

$$f_{t\_var} = \frac{1}{N} \sum_{n=1}^{N} (tiredness_n - f_{t\_average})^2 \tag{6}$$

Here, $f_{f\_var}$ indicates that the comfort level overall value is the variance of the comfort levels of the users, and *feeling* indicates the comfort level of each user. $f_{t\_var}$ indicates that the fatigue level overall value is the variance of the fatigue levels of the users. *tiredness* indicates the fatigue level of each user. $f_{f\_average}$ indicates the average value of the comfort levels of the users. $f_{t\_average}$ indicates the average value of the fatigue levels of the users. N is the number of the users.

In the example of the present invention, as shown in Fig. 6, the method may further include:

a step 603 of comparing the calculated comfort level overall value and/or fatigue level overall value of the users with a preset optimal comfort level and/or optimal fatigue level, and determining whether the calculated comfort level overall value and/or fatigue level overall value of the users is less than or equal to the preset optimal comfort level and/or optimal fatigue level; in other words, determining whether the calculated overall value is less than or equal to a preset optimal value, wherein, if the determination result is "Yes", the step 603 proceeds to step 604, and if "No", the step returns to step 601 to perform processing based on the temperatures and humidities corresponding to the located positions of the plurality of users at a next time; and

a step 604 of taking the calculated comfort level overall value and/or fatigue level overall value of the users as the state parameter overall value of the users.

That is, steps 101 to 104 may be cyclically performed at a certain periodicity, so as to obtain an optimal state parameter overall value.

Thus, since the environment parameters (such as temperature and humidity) continuously change, the periodic detection by the sensor enables the user to set a detection periodicity to collect data and perform processing based on the collected data, making it possible to not only save energy but also ensure that the users are in an optimal user state in all weathers.

As shown in Fig. 1, after the state parameter overall value of the users is determined, the state parameter overall value is input into the first prediction model in step 105, and a target parameter distribution of the environment adjustment device is output.

In the example of the present invention, the target parameter distribution is a distribution of the target values of setting parameters of the environment adjustment device in the indoor space. The parameters correspond to the collected environment parameters. The target values are idealized setting values. That is, the target parameters obtained by the example of the present invention are not a single target parameter, but are target parameters related to different positions in the indoor space; that is, the target parameters represent the indoor space as a whole.

For example, when the collected environment parameters include temperature and humidity, the target parameter distribution that is output includes a target temperature distribution which is the distribution of the target values of temperature in the indoor space and a target humidity distribution which is the distribution of the target values of humidity in the indoor space.

For example, when the collected environment parameters include luminance, the target parameter distribution that is output includes a target luminance distribution which is the distribution of the target values of luminance in the indoor space.

In the example of the present invention, when the target parameter distributions include a plurality of types of target parameter distributions, a plurality of types of target parameter distributions can be acquired by using a first prediction model that has been trained with the plurality of types of target parameters. Alternatively, each of a plurality of first prediction models may be trained based on the type of the target parameter. Each of the first prediction models corresponds to one type of target parameter and outputs one type of target parameter distribution.

In the example of the present invention, the first prediction model may be a trained multi-layer perceptron model or a deep neural network. The training data includes, for example, historical data of state parameter overall values of the user.

In the example of the present invention, the environment adjustment device may be controlled based on the target parameter distribution. For example, the environment adjustment device is directly set based on the target parameter distribution.

Alternatively, the target parameter distribution may be further processed to further improve the accuracy of the setting value.

As shown in Fig. 1, the method may further includes:

a step 106 of inputting the target parameter distribution into a second prediction model, and outputting a parameter setting value of the environment adjustment device; and

a step 107 of controlling the environment adjustment device based on the parameter setting value of the environment adjustment device.

Thus, when the target parameter distribution is further input into the second prediction model to obtain the parameter setting value to control the device, the characteristics of the device itself and other factors are taken into consideration so that the parameter setting value is more suitable for the actual environment, thereby further improving the device performance and user experience.

As shown in Fig. 1, after the target parameter distribution of the environment adjustment device is output, the target parameter distribution is input into the second prediction model in step 106, and the parameter setting value of the environment adjustment device is output.

In the example of the present invention, the target parameter distribution is an ideal setting value for the environment adjustment device; however, the environment adjustment device cannot quickly or accurately reach the state of the target parameter distribution due to some practical factors of the application scene of the environment adjustment device, such as the building, the room type, and the design of the environment adjustment device. However, in the example of the present invention, an actual parameter setting value of the environment adjustment device that is the parameter setting value of the environment adjustment device can be determined based on the actual factors as well as the target parameter distribution. Thus, the characteristics of the device itself and other factors are taken into consideration so that the parameter setting value is more suitable for the actual environment, thereby enabling the environment to quickly reach the parameter setting value, and improving the device performance and user experience.

In the example of the present invention, the parameter setting value corresponds to the target parameter distribution. For example, when the target parameter distribution includes a target temperature distribution and a target humidity distribution, the parameter setting value that is output by the second prediction model includes a temperature setting value and a humidity setting value.

In the example of the present invention, when the target parameter distribution includes a plurality of types of target parameter distributions, a plurality of types of parameter setting values may be acquired by using a second prediction model trained on the plurality of types of target parameter distributions. Alternatively, each of a plurality of second prediction models may be trained based on the type of the target parameter distribution. Each of the second prediction models corresponds to one type of target parameter distribution and outputs one type of parameter setting value.

In the example of the present invention, the second prediction model may be a trained multi-layer perceptron model or a deep neural network, and the training data includes, for example, historical data of the target parameter distribution and actual factors of the application scene of the environment adjustment device.

In another method for implementing step 106, in addition to inputting the target parameter distribution into the second prediction model, a time-related environment parameter may also be input into the second prediction model as input data.

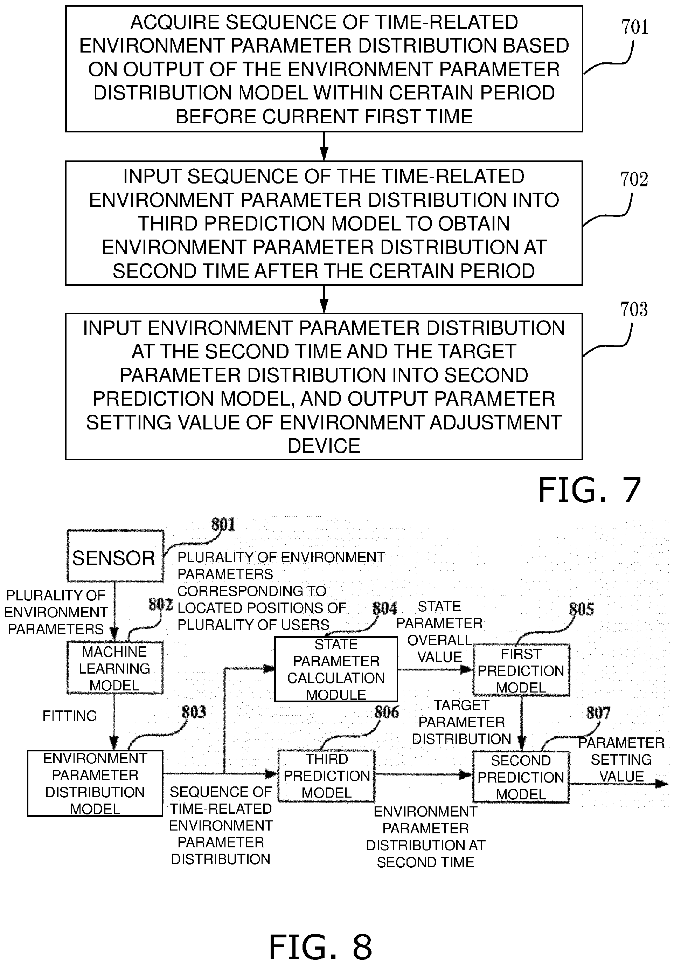

Fig. 7 is a flowchart of another method for implementing step 106 according to Example 1 of the present invention. As shown in Fig. 7, the method includes:

a step 701 of acquiring a sequence of a time-related environment parameter distribution based on an output of the environment parameter distribution model within a certain period before a current first time;
a step 702 of inputting the sequence of the time-related environment parameter distribution into a third prediction model to obtain an environment parameter distribution at a second time after the certain period; and
a step 703 of inputting the environment parameter distribution at the second time and the target parameter distribution into a second prediction model, and outputting a parameter setting value of the environment adjustment device.

When a certain sudden situation is encountered, the actual environment parameter distribution in the room is changed, which affects the actual adjustment by the environment adjustment device and degrades user experience. For example, a sudden situation such as a sudden start of wind blowing outdoors or a breakdown of air conditioning changes the actual temperature distribution in the room, affects the actual adjustment by air conditioning, and further affects the precision of the comfort level, thereby degrading user experience. The spatial data of the indoor distribution at a later time is acquired by using the third prediction model, whereby, when an actual temperature setting value is further calculated based on the temperature distribution and the target temperature distribution at the second time when the prediction has been completed, a setting value that is closest to the actual temperature distribution in the room can be calculated. When the air conditioning is adjusted with such a setting value, the adjustment result by the air conditioning can be made closer to the real condition and the adjustment accuracy is further improved, thereby improving user experience.

In the example of the present invention, the output of the environment parameter distribution model is not only used to determine the plurality of environment parameters corresponding to the located positions of the plurality of users in step 103, but also used to obtain the sequence of the time-related environment parameter distribution in step 701.

If the environment parameters include different types of environment parameters, respective sequences of different types of environment parameter distributions are acquired.

For example, if the environment parameters include temperature and humidity, in step 701, respective sequences of time-related temperature distribution and time-related humidity distribution are acquired.

In step 702, the sequence of time-related environment parameter distribution is input into a third prediction model to obtain an environment parameter distribution at a second time after the certain period, i.e., to predict a future environment parameter distribution.

In the example of the present invention, the third prediction model may be a trained deep neural network including a long short-term memory (LSTM) structure or a gated regression unit (GRU) structure. The training data includes, for example, historical data of environment parameters acquired at the same interval time point.

As shown in Fig. 1, after the parameter setting value of the environment adjustment device is acquired, in step 107, the environment adjustment device is controlled based on the parameter setting value of the environment adjustment device.

For example, after the temperature setting value of the air conditioner is acquired, the temperature setting value of the air conditioner is adjusted to the acquired temperature setting value.

Fig. 8 is a schematic diagram of a data processing process of the control method for the environment adjustment device according to Example 1 of the present invention. As shown in Fig. 8, at least one sensor 801 collects a plurality of environment parameters at different positions in a room and provides the environment parameters to a machine learning model 802. After fitting, an environment parameter distribution model 803 is acquired. Based on positions of a plurality of users, the environment parameter distribution model 803 outputs a plurality of environment parameters corresponding to the located positions of the plurality of users to a state parameter calculation module 804. The state parameter calculation module 804 outputs a state parameter overall value of the users. The state parameter overall value is input into a first prediction model 805, and a target parameter distribution of the environment adjustment device is output. In addition, the environment parameter distribution model 803 further outputs the sequence of a time-related environment parameter distribution within a certain period to a third prediction model 806. The third prediction model 806 outputs the environment parameter distribution at a second time after the certain period. The target parameter distribution output by the first prediction model 805 and the environment parameter distribution at the second time output by the third prediction model 806 are both input into the second prediction model 807 to obtain the parameter setting value of the environment adjustment device.

Hereinafter, air conditioning will be illustratively described by way of example.

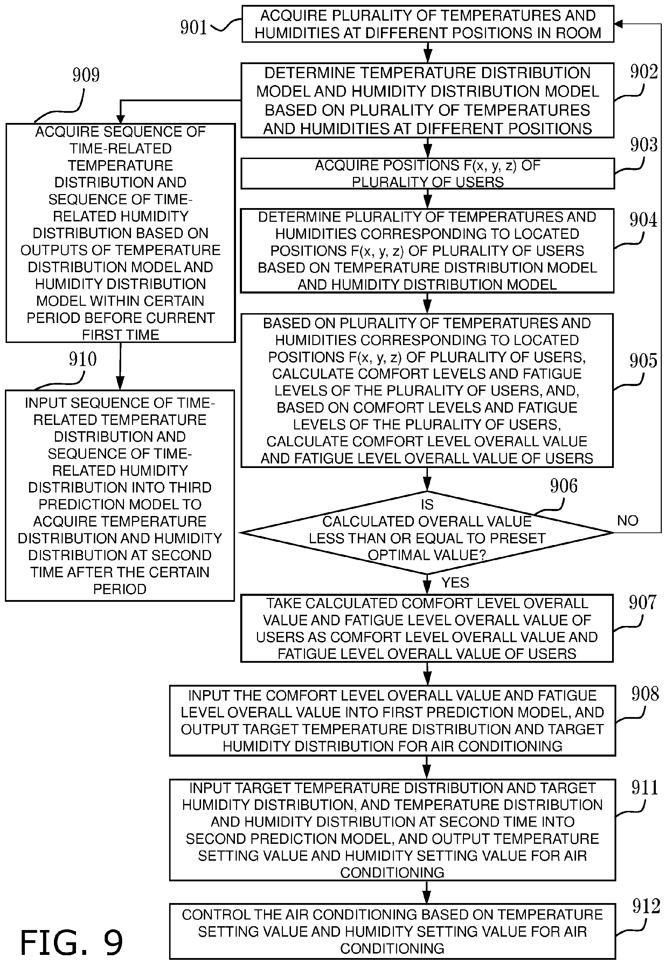

Fig. 9 is a flowchart of an air-conditioning control method according to Example 1 of the present invention. As shown in Fig. 9, the method includes:

a step 901 of acquiring a plurality of temperatures and humidities at different positions in a room;
a step 902 of determining a temperature distribution model and a humidity distribution model based on the plurality of temperatures and humidities at the different positions;
a step 903 of acquiring positions f(x, y, z) of a plurality of users;
a step 904 of determining a plurality of temperatures and humidities corresponding to located positions f(x, y, z) of the plurality of users based on the temperature distribution model and the humidity distribution model;
a step 905 of calculating respective comfort levels and fatigue levels of the plurality of users based on the plurality of temperatures and humidities corresponding to the located positions f(x, y, z) of the plurality of users, and calculating a comfort level overall value and a fatigue level overall value of the users based on the comfort levels and the fatigue levels of the plurality of users;
a step 906 of determining whether the calculated comfort level overall value and fatigue level overall value are respectively less than or equal to a preset optimal comfort level value and optimal fatigue level value; in other words, determining whether the calculated overall value is less than or equal to a preset optimal value, and if the determination result is "Yes", the step proceeds to step 907 and if "No", the step returns to step 901 to perform processing based on the temperature and humidity at a next time;
a step 907 of taking the calculated comfort level overall value and fatigue level overall value of the users as the comfort level overall value and the fatigue level overall value of the users;
a step 908 of inputting the comfort level overall value and the fatigue level overall value into a first prediction model, and outputting a target temperature distribution and a target humidity distribution for air conditioning;
a step 909, after step 902, of acquiring the sequences of a time-related temperature distribution and humidity distribution based on the outputs of the temperature distribution model and the humidity distribution model within a certain period before a current first time;
a step 910 of inputting the sequence of the time-related temperature distribution and the sequence of the time-related humidity distribution into a third prediction model to obtain a temperature distribution and a humidity distribution at a second time after the certain period;
a step 911 of inputting the target temperature distribution and the target humidity distribution, and the temperature distribution and the humidity distribution at the second time into a second prediction model, and outputting a temperature setting value and a humidity setting value for air conditioning; and

a step 912 of controlling the air conditioning, based on the temperature setting value and the humidity setting value for air conditioning.

In the example of the present invention, there is no restrictions on the order of execution between steps 909 and 910 and steps 903 to 908, and steps 909 and 910 and steps 903 to 908 may be each independently executed in parallel or sequentially.

In the above embodiment, while the target parameter distribution of the environment adjustment device is acquired by inputting the state parameter overall value into the first prediction model, the present invention is not limited to the scheme in which the target parameter distribution of the environment adjustment device is acquired by using a prediction model.

For example, the target parameter distribution of the environment adjustment device can be determined by a lookup table method.

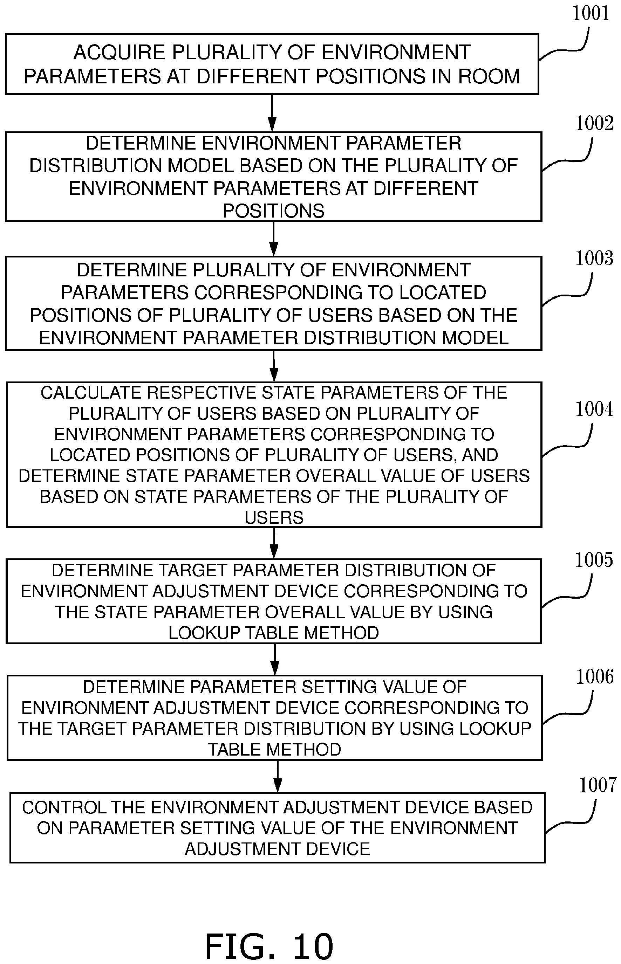

Fig. 10 is another flowchart of the control method for the environment adjustment device according to Example 1 of the present invention. As shown in Fig. 10, the method includes:

a step 1001 of obtaining a plurality of environment parameters at different positions in a room;

a step 1002 of determining an environment parameter distribution model based on the plurality of environment parameters at the different positions;

a step 1003 of determining a plurality of environment parameters corresponding to located positions of a plurality of users based on the environment parameter distribution model;

a step 1004 of calculating respective state parameters of the plurality of users based on the plurality of environment parameters corresponding to the located positions of the plurality of users, and determining a state parameter overall value of the users based on the state parameters of the plurality of users; and

a step 1005 of determining a target parameter distribution of the environment adjustment device corresponding to the state parameter overall value by using a lookup table method.

The contents of step 1001 to step 1004 are the same as those of step 101 to step 104, and the description will not be repeated here.

In step 1005, the target parameter distribution of the environment adjustment device can be determined by a simple scheme using a lookup table method instead of using the first prediction model in step 105.

In the example of the present invention, a correspondence table between the state parameter overall value and the target parameter distribution may be established in advance. For example, the state parameter overall value may include at least one of a comfort level overall value and a fatigue level overall value. A target parameter distribution table corresponding to the comfort level overall value may be established, a target parameter distribution table corresponding to the fatigue level overall value may be established, or a target parameter distribution table corresponding to both the comfort level overall value and the fatigue level overall value may be established. The target parameter distribution may include a temperature distribution and/or a humidity distribution.

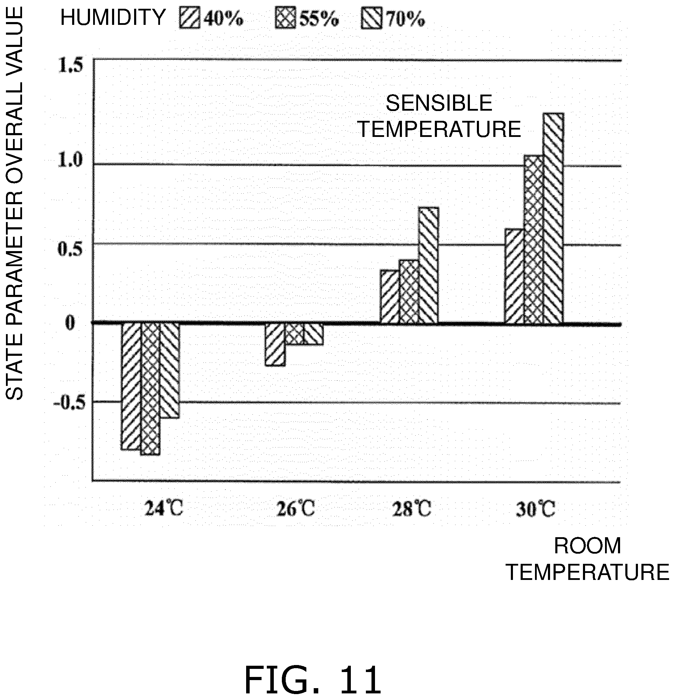

Fig. 11 is a schematic diagram of the corresponding relationship between the state parameter overall value and the target parameter distribution according to Example 1 of the present invention. As shown in Fig. 11, for example, with respect to the comfort level overall value, the discomfort can be reduced by reducing the humidity in the room temperature range of 26 to 30°C, and for the fatigue level overall value, fatigue is obviously reduced at 28°C with a humidity of 40%, and fatigue also tends to be reduced at a humidity of 55% or less. That is, within a certain temperature range, a high comfort level overall value corresponds to low humidity, and a low fatigue level overall value corresponds to high humidity.

Fig. 11 is merely an example, and does not restrict the correspondence relationship between the state parameter overall value and the target parameter distribution.

In addition, as shown in FIG. 10, the method further includes:

a step 1006 of using the lookup table method to determine the parameter setting value of the environment adjustment device corresponding to the target parameter distribution; and

a step 1007 of controlling the environment adjustment device based on the parameter setting value of the environment adjustment device.

In step 1006, the parameter setting value of the environment adjustment device can be determined by a simple scheme using a lookup table method instead of the method using the second prediction model in step 106.

That is, a correspondence table between the target parameter distribution and the parameter setting value can be established in advance. The target parameter distribution may include a temperature distribution and/or a humidity distribution. The parameter setting value may include a temperature setting value and/or a humidity setting value.

Step 1006 and step 1007 are optional steps. Steps 105 and 106 may be used in place of steps 1006 and 1007.

As will be seen from the above examples, an environment parameter distribution model is determined based on a plurality of environment parameters at different positions, and environment parameters corresponding to the positions of a plurality of users are determined based on the environment parameter distribution model, so that the environment state of the entire space can be accurately reflected based on the environment parameters collected at the limited positions, and accurate environment parameters corresponding to the positions of the plurality of users can be easily acquired. Accordingly, the environment parameter distribution of the entire space can be acquired at a low cost and applied to many large spatial areas such as schools, office places, department stores, schools, exhibition areas or multi-functional halls, and can also be applied to homes. Respective state parameters of the plurality of users are calculated based on the accurate environment parameters corresponding to the positions of the plurality of users, and the state parameter overall value of the users is determined based on the state parameters of the plurality of users, whereby the state parameter overall value can reflect the overall state of the plurality of users. Furthermore, the target parameter distribution of the environment adjustment device is acquired by using the first prediction model from the state parameter overall value reflecting the overall state of the plurality of users, whereby it is possible to accurately adapt the target parameter distribution to the plurality of users as a whole. The device is controlled based on the target parameter distribution, whereby the plurality of users can all be in a comfortable state, thereby improving the performance of the device and user experience.

Example 2

Example 2 of the present invention provides a control device for an environment adjustment device that corresponds to the control method for the environment adjustment device as described in Example 1, and for the specific implementation of the control device, reference may be made to the implementation of the method described in Example 1; hence, the descriptions of the similar or related contents will not be repeated.

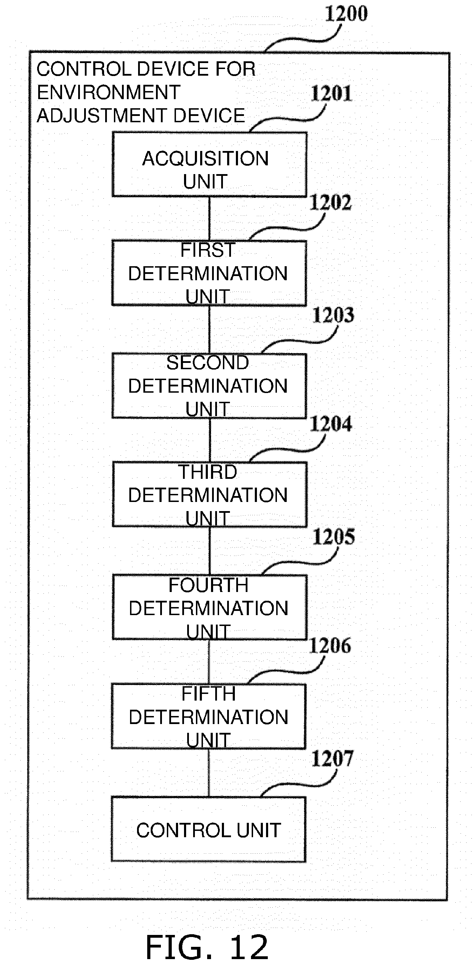

Fig. 12 is a schematic diagram of the control device for the environment adjustment device according to Example 2 of the present invention, and as shown in Fig. 12, a control device 1200 for the environment adjustment device includes:

an acquisition unit 1201 that acquires a plurality of environment parameters at different positions in a room;
a first determination unit 1202 that determines an environment parameter distribution model based on the plurality of environment parameters at the different positions;
a second determination unit 1203 that determines a plurality of environment parameters corresponding to located positions of the plurality of users based on the environment parameter distribution model;
a third determination unit 1204 that calculates respective state parameters of the plurality of users based on the plurality of environment parameters corresponding to the located positions of the plurality of users, and determines a state parameter overall value of the users based on the state parameters of the plurality of users; and
a fourth determination unit 1205 that inputs the state parameter overall value into a first prediction model and outputs a target parameter distribution of the environment adjustment device.

In the example of the present invention, as shown in Fig. 12, the device 1200 may further include:

a fifth determination unit 1206 that inputs the target parameter distribution into a second prediction model and outputs a parameter setting value of the environment adjustment device; and
a control unit 1207 that controls the environment adjustment device based on the parameter setting value of the environment adjustment device.

In the example of the present invention, for the implementation of the functions of the units, reference may be made to the related steps in Example 1, and their descriptions will not be repeated here.

As will be seen from the above example, an environment parameter distribution model is determined based on a plurality of environment parameters at different positions, and environment parameters corresponding to the positions of a plurality of users are determined based on the environment parameter distribution model, the environment state of the entire space is accurately reflected based on the environment parameters collected at the limited positions, and accurate environment parameters corresponding to the positions of the plurality of users can be easily acquired. Accordingly, the environment parameter distribution of the entire space can be acquired at a low cost and applied to many large spatial areas such as schools, office places, department stores, schools, exhibition areas or multi-functional halls, and can also be applied to homes. Respective state parameters of the plurality of users are calculated based on the accurate environment parameters corresponding to the positions of the plurality of users, and the state parameter overall value of the users is determined based on the state parameters of the plurality of users, whereby the state parameter overall value can reflect the overall state of the plurality of users. Further, a target parameter distribution of the environment adjustment device is acquired by using a first prediction model from the state parameter overall value reflecting the overall state of the plurality of users, whereby the target parameter distribution can be accurately adapted to the plurality of users as a whole. The device is controlled based on the target parameter distribution, whereby the plurality of users can all be in a comfortable state, thereby improving the performance of the device and user experience.

Example 3

Example 3 of the present invention provides an intelligent environment adjustment system, including the control device for the environment adjustment device as described in Example 2, and for the implementation of the intelligent environment adjustment system, reference may be made to the implementations of the device described in Example 2 and the method described in Example 1; hence, where the contents are similar or related, the description will not be repeated.

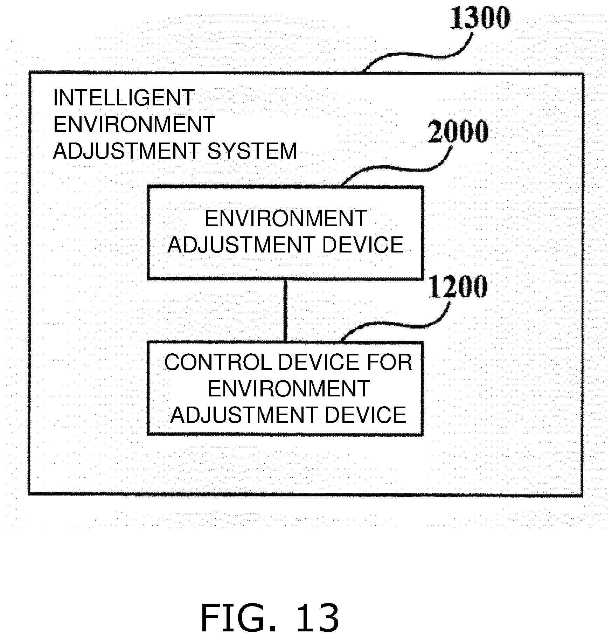

Fig. 13 is a structural diagram of the intelligent environment adjustment system according to Example 3 of the present invention, and, as shown in Fig. 13, an intelligent environment adjustment system 1300 includes:

an environment adjustment device 2000; and
a control device 1200 for the environment adjustment device that controls the environment adjustment device 2000.

In the example of the present invention, the control device 1000 for the environment adjustment device may be a separate device, or may be integrated into the environment adjustment device 2000.

In the example of the present invention, the environment adjustment device may be various types of furniture devices, and, for example, the environment adjustment device is at least one of an air conditioner, an air purifier, a fresh air device, a humidifier, a disinfector, a lighting device, and an acoustic device.

In the example of the present invention, the intelligent environment adjustment system 1300 may be used for homes, or for commercial or public use.

For example, the intelligent environment adjustment system 1300 may be used in a home environment, a commercial environment such as an office, an office building, or a department store, or a public environment such as a school.

In the example of the present invention, for the specific structure and function of the control device 1200 of the environment adjustment device, reference may be made to the device described in Example 2 and the method described in Example 1; hence, the description will not be repeated here.

In addition to the control functions described in the example of the present invention, the control device 1200 for the environment adjustment device may further include other control functions, such as switch control and timing control.

As will be seen from the above example, an environment parameter distribution model is determined based on a plurality of environment parameters at different positions, and environment parameters corresponding to positions of a plurality of users are determined based on the environment parameter distribution model, the environment state of the entire space is accurately reflected based on the environment parameters collected at the limited positions, and accurate environment parameters corresponding to the positions of the plurality of users can be easily acquired. Accordingly, the environment parameter distribution of the entire space can be acquired at a low cost and applied to many large spatial areas such as schools, office places, department stores, schools, exhibition areas or multi-functional halls, and can also be applied to homes. Respective state parameters of the plurality of users are calculated based on the accurate environment parameters corresponding to the positions of the plurality of users, and the state parameter overall value of the users is determined based on the state parameters of the plurality of users, whereby the state parameter overall value can reflect the overall state of the plurality of users. Further, a target parameter distribution of the environment adjustment device is acquired by using a first prediction model from the state parameter overall value reflecting the overall state of the plurality of users, whereby the target parameter distribution can be accurately adapted to the plurality of users as a whole. The device is controlled based on the target parameter distribution, whereby the plurality of users can all be in a comfortable state, thereby improving the performance of the device and user experience.

The above device and method according to the examples of the present invention may be implemented by hardware, or may be implemented by hardware in combination with software. The present invention relates to a computer-readable program which, when executed by a logic component, can cause the logic component to implement the above device or constituent components, or cause the logic component to implement the above various methods or steps.

An example of the present invention further relates to a storage medium for storing the above program, such as a hard disk, a magnetic disk, an optical disc, a DVD, or a flash memory.

It should be noted that the limitation of each step according to the present solution does not limit the temporal order of the steps, on the premise that it does not affect the implementation of the specific solution, and the steps written earlier may be executed first, or may be executed later, or may be executed at the same time, all of which belong to the scope of protection of the present application as long as the present solution can be implemented.

Although the present invention has been described with reference to specific embodiments, those skilled in the art will appreciate that these descriptions are only exemplary and are not intended to limit the scope of protection of the present invention. A person skilled in the art may make various modifications and corrections to the present invention based on the spirit and principles of the present invention, and these modifications and corrections also fall within the scope of the present invention.

**Claims**

1. A control method for an environment adjustment device, the method comprising:

   a step of acquiring a plurality of environment parameters at different positions in a room;
   a step of determining an environment parameter distribution model based on the plurality of environment parameters at the different positions;
   a step of determining a plurality of environment parameters corresponding to located positions of a plurality of users based on the environment parameter distribution model;
   a step of calculating respective state parameters of the plurality of users based on the plurality of environment parameters corresponding to the located positions of the plurality of users, and determining a state parameter overall value of the users based on the state parameters of the plurality of users; and
   a step of inputting the state parameter overall value into a first prediction model, and outputting a target parameter distribution of the environment adjustment device.

2. The control method for the environment adjustment device according to claim 1, wherein the step of acquiring a plurality of environment parameters at different positions in a room includes:

   a step of acquiring the plurality of environment parameters at the different positions from a plurality of sensors distributed at different positions in the room; or
   a step of acquiring the plurality of environment parameters at the different positions from a sensor that is movable in the room.

3. The control method for the environment adjustment device according to claim 1, wherein the step of determining an environment parameter distribution model based on the plurality of environment parameters includes:

   a step of establishing a machine learning model;
   a step of inputting the plurality of environment parameters and position data corresponding to the plurality of environment parameters into the machine learning model for training; and
   a step of acquiring the environment parameter distribution model upon completion of training.

4. The control method for the environment adjustment device according to claim 1, wherein the step of determining a plurality of environment parameters corresponding to located positions of a plurality of users based on the environment parameter distribution model includes;

   a step of identifying positions of the plurality of users in the room; and
   a step of inputting the positions of the plurality of users into the environment parameter distribution model, and outputting the plurality of environment parameters corresponding to the located positions of the plurality of users.

5. The control method for the environment adjustment device according to claim 4, wherein the step of identifying positions of the plurality of users in the room includes:

   a step of determining the positions of the plurality of users in the room by detecting an image captured by an indoor camera; or
   a step of identifying the positions of the plurality of users in the room by emitting an ultrasonic signal, a radar signal, or an infrared signal into the room; or
   a step of identifying the positions of the plurality of users in the room by detecting wireless signals transmitted from terminal devices carried by the plurality of users in the room.

**6.** The control method for the environment adjustment device according to claim 4, wherein the positions of the plurality of users are two dimensional positions not including height or three dimensional positions including height.

**7.** The control method for the environment adjustment device according to claim 4, wherein the positions of the plurality of users include positions of the plurality of users themselves and a position around the plurality of users.

**8.** The control method for the environment adjustment device according to claim 1, wherein the step of calculating respective state parameters of the plurality of users based on the plurality of environment parameters corresponding to the located positions of the plurality of users, and determining a state parameter overall value of the users based on the state parameters of the plurality of users includes:

a step of calculating respective comfort levels and/or fatigue levels of the plurality of users based on temperatures and humidities corresponding to the located positions of the plurality of users; and
a step of calculating a comfort level overall value and/or a fatigue level overall value of the users based on the comfort levels and the fatigue levels of the plurality of users.

**9.** The control method for the environment adjustment device according to claim 8, wherein the step of calculating a comfort level overall value and/or a fatigue level overall value of the users based on the comfort levels and/or the fatigue levels of the plurality of users includes:
a step of calculating a sum, an average, a variance, or a standard deviation of the comfort levels of the plurality of users, and/or calculating a sum, an average, a variance, or a standard deviation of the fatigue levels of the plurality of users, to obtain the comfort level overall value and/or the fatigue level overall value of the users.

**10.** The control method for the environment adjustment device according to claim 8, wherein the step of calculating respective state parameters of the plurality of users based on the plurality of environment parameters corresponding to the located positions of the plurality of users, and determining a state parameter overall value of the users based on the state parameters of the plurality of users further includes:

a step of comparing the calculated comfort level overall value and/or fatigue level overall value of the users with a preset optimal comfort level and/or optimal fatigue level; and
a step of, if the calculated comfort level overall value and/or fatigue level overall value of the users is less than or equal to the preset optimal comfort level and/or optimal fatigue level, taking the calculated comfort level overall value and/or fatigue level overall value of the users as the state parameter overall value of the users.

**11.** The control method for the environment adjustment device according to claim 1, further comprising:

a step of inputting the target parameter distribution into a second prediction model and outputting a parameter setting value of the environment adjustment device; and
a step of controlling the environment adjustment device based on the parameter setting value of the environment adjustment device.

**12.** The control method for the environment adjustment device according to claim 11, wherein the first prediction model and the second prediction model are trained multi-layer perceptron models or deep neural networks.

**13.** The control method for the environment adjustment device according to claim 11, wherein the step of inputting the target parameter distribution into a second prediction model and outputting a parameter setting value of the environment adjustment device includes:

a step of acquiring a sequence of a time-related environment parameter distribution based on an output of the environment parameter distribution model within a certain period before a current first time;
a step of inputting the sequence of the time-related environment parameter distribution into a third prediction model to obtain an environment parameter distribution at a second time after the certain period; and
a step of inputting the environment parameter distribution at the second time and the target parameter distribution into the second prediction model, and outputting the parameter setting value of the environment adjustment device.

**14.** The control method for the environment adjustment device according to claim 13, wherein the third prediction model is a trained deep neural network including a long short-term memory (LSTM) structure or a gated regression unit (GRU) structure.

15. The control method for the environment adjustment device according to any one of claims 1 to 14, wherein:

the environment parameters include at least one of temperature, humidity, wind direction, air volume, sound volume, audio frequency, luminance, color temperature, and air quality; and
the environment parameter distribution model includes at least one of a temperature distribution model, a humidity distribution model, a wind direction distribution model, an air volume distribution model, a sound volume distribution model, an audio frequency distribution model, a luminance distribution model, a color temperature distribution model, and an air quality distribution model.

16. The control method for the environment adjustment device according to any one of claims 1 to 14, wherein the environment adjustment device is at least one of an air conditioner, an air purifier, a fresh air device, a humidifier, a disinfector, a lighting device, and an acoustic device.

17. A control method for the environment adjustment device, the method comprising:

a step of acquiring a plurality of environment parameters at different positions in a room; a step of determining an environment parameter distribution model based on the plurality of environment parameters at the different positions;
a step of determining a plurality of environment parameters corresponding to located positions of a plurality of users based on the environment parameter distribution model;
a step of calculating respective state parameters of the plurality of users based on the plurality of environment parameters corresponding to the located positions of the plurality of users, and determining a state parameter overall value of the users based on the state parameters of the plurality of users; and
a step of determining a target parameter distribution of the environment adjustment device corresponding to the state parameter overall value by using a lookup table method.

18. The control method for the environment adjustment device according to claim 17, further comprising:

a step of determining a parameter setting value of the environment adjustment device corresponding to the target parameter distribution by using the lookup table method; and
a step of controlling the environment adjustment device based on the parameter setting value of the environment adjustment device.

19. A control device for an environment adjustment device, the control device comprising:

an acquisition unit that acquires a plurality of environment parameters at different positions in a room;
a first determination unit that determines an environment parameter distribution model based on the plurality of environment parameters at the different positions;
a second determination unit that determines a plurality of environment parameters corresponding to located positions of a plurality of users based on the environment parameter distribution model;
a third determination unit that calculates respective state parameters of the plurality of users based on the plurality of environment parameters corresponding to the located positions of the plurality of users, and determines a state parameter overall value of the users based on the state parameters of the plurality of users; and
a fourth determination unit that inputs the state parameter overall value into a first prediction model and outputs a target parameter distribution of the environment adjustment device.

20. The control device for the environment adjustment device according to claim 19, further comprising:

a fifth determination unit that inputs the target parameter distribution into a second prediction model, and outputs a parameter setting value of the environment adjustment device; and
a control unit that controls the environment adjustment device based on the parameter setting value of the environment adjustment device.

21. An intelligent environment adjustment system comprising:

an environment adjustment device; and

the control device for the environment adjustment device according to claim 19 or 20 that controls the environment adjustment device.

22. The intelligent environment adjustment system according to claim 21, further comprising,

a plurality of sensors that are distributed at different positions in the room to collect the plurality of environment parameters at the different positions; or

a sensor that is movable in the room to collect the plurality of environment parameters at the different positions.

101

ACQUIRE PLURALITY OF ENVIRONMENT PARAMETERS AT DIFFERENT POSITIONS IN ROOM

102

DETERMINE ENVIRONMENT PARAMETER DISTRIBUTION MODEL BASED ON THE PLURALITY OF ENVIRONMENT PARAMETERS AT DIFFERENT POSITIONS

103

DETERMINE PLURALITY OF ENVIRONMENT PARAMETERS CORRESPONDING TO LOCATED POSITIONS OF PLURALITY OF USERS BASED ON THE ENVIRONMENT PARAMETER DISTRIBUTION MODEL

104

CALCULATE RESPECTIVE STATE PARAMETERS OF THE PLURALITY OF USERS BASED ON PLURALITY OF ENVIRONMENT PARAMETERS CORRESPONDING TO LOCATED POSITIONS OF PLURALITY OF USERS, AND DETERMINE STATE PARAMETER OVERALL VALUE OF USERS BASED ON STATE PARAMETERS OF THE PLURALITY OF USERS

105

INPUT THE STATE PARAMETER OVERALL VALUE INTO FIRST PREDICTION MODEL, AND OUTPUT TARGET PARAMETER DISTRIBUTION OF ENVIRONMENT ADJUSTMENT DEVICE

106

INPUT THE TARGET PARAMETER DISTRIBUTION INTO SECOND PREDICTION MODEL, AND OUTPUT PARAMETER SETTING VALUE OF ENVIRONMENT ADJUSTMENT DEVICE

107

CONTROL THE ENVIRONMENT ADJUSTMENT DEVICE BASED ON PARAMETER SETTING VALUE OF THE ENVIRONMENT ADJUSTMENT DEVICE

FIG. 1

201

SENSOR ACQUIRES ITS OWN POSITION DATA, TEMPERATURE DATA, AND HUMIDITY DATA IN SPATIAL AREA

202

SENSOR TRANSMITS ACQUIRED POSITION DATA, TEMPERATURE DATA, AND HUMIDITY DATA TO DATA MANAGEMENT CENTER

203

ACQUIRE POSITION DATA, TEMPERATURE DATA, AND HUMIDITY DATA FROM DATA MANAGEMENT CENTER

FIG. 2

301

SENSOR IS CONNECTED TO POSITIONING
BASE STATION NETWORK WITHIN REGION IN
THE FORM OF BLUETOOTH COMMUNICATION

302

SENSOR PERIODICALLY TRANSMITS
TEMPERATURE, HUMIDITY, AND LOCATION
INFORMATION TO GATEWAY

303

GATEWAY TRANSMITS COLLECTED DATA TO
IOT CLOUD THROUGH HTTP PROTOCOL OR
MQTT PROTOCOL

304

ACQUIRE THE DATA FROM IOT CLOUD USING
HTTP PROTOCOL OR MQTT PROTOCOL

FIG. 3

401

ESTABLISH MACHINE LEARNING MODEL

402

INPUT THE PLURALITY OF ENVIRONMENT PARAMETERS AND POSITION DATA CORRESPONDING TO THE PLURALITY OF ENVIRONMENT PARAMETERS INTO THE MACHINE LEARNING MODEL FOR TRAINING

403

THE ENVIRONMENT PARAMETER DISTRIBUTION MODEL IS OBTAINED UPON COMPLETION OF TRAINING

FIG. 4

501

IDENTIFY POSITIONS OF PLURALITY OF USERS IN ROOM

502

INPUT POSITIONS OF THE PLURALITY OF USERS INTO THE ENVIRONMENT PARAMETER DISTRIBUTION MODEL, AND OUTPUT PLURALITY OF ENVIRONMENT PARAMETERS CORRESPONDING TO LOCATED POSITIONS OF PLURALITY OF USERS

FIG. 5

601

CALCULATE RESPECTIVE COMFORT LEVELS AND/OR FATIGUE LEVELS OF PLURALITY OF USERS BASED ON TEMPERATURES AND HUMIDITIES CORRESPONDING TO LOCATED POSITIONS OF THE PLURALITY OF USERS

602

CALCULATE COMFORT LEVEL OVERALL VALUE AND/OR FATIGUE LEVEL OVERALL VALUE OF USERS BASED ON COMFORT LEVELS AND FATIGUE LEVELS OF THE PLURALITY OF USERS

603

IS CALCULATED OVERALL VALUE LESS THAN OR EQUAL TO PRESET OPTIMAL VALUE?

NO

YES

604

TAKE CALCULATED COMFORT LEVEL OVERALL VALUE AND/OR FATIGUE LEVEL OVERALL VALUE OF USERS AS STATE PARAMETER OVERALL VALUE OF USERS

FIG. 6

ACQUIRE SEQUENCE OF TIME-RELATED ENVIRONMENT PARAMETER DISTRIBUTION BASED ON OUTPUT OF THE ENVIRONMENT PARAMETER DISTRIBUTION MODEL WITHIN CERTAIN PERIOD BEFORE CURRENT FIRST TIME — 701

INPUT SEQUENCE OF THE TIME-RELATED ENVIRONMENT PARAMETER DISTRIBUTION INTO THIRD PREDICTION MODEL TO OBTAIN ENVIRONMENT PARAMETER DISTRIBUTION AT SECOND TIME AFTER THE CERTAIN PERIOD — 702

INPUT ENVIRONMENT PARAMETER DISTRIBUTION AT THE SECOND TIME AND THE TARGET PARAMETER DISTRIBUTION INTO SECOND PREDICTION MODEL, AND OUTPUT PARAMETER SETTING VALUE OF ENVIRONMENT ADJUSTMENT DEVICE — 703

FIG. 7

FIG. 8

901 — ACQUIRE PLURALITY OF TEMPERATURES AND HUMIDITIES AT DIFFERENT POSITIONS IN ROOM

902 — DETERMINE TEMPERATURE DISTRIBUTION MODEL AND HUMIDITY DISTRIBUTION MODEL BASED ON PLURALITY OF TEMPERATURES AND HUMIDITIES AT DIFFERENT POSITIONS

903 — ACQUIRE POSITIONS F(x, y, z) OF PLURALITY OF USERS

904 — DETERMINE PLURALITY OF TEMPERATURES AND HUMIDITIES CORRESPONDING TO LOCATED POSITIONS F(x, y, z) OF PLURALITY OF USERS BASED ON TEMPERATURE DISTRIBUTION MODEL AND HUMIDITY DISTRIBUTION MODEL

905 — BASED ON PLURALITY OF TEMPERATURES AND HUMIDITIES CORRESPONDING TO LOCATED POSITIONS F(x, y, z) OF PLURALITY OF USERS, CALCULATE COMFORT LEVELS AND FATIGUE LEVELS OF THE PLURALITY OF USERS, AND, BASED ON COMFORT LEVELS AND FATIGUE LEVELS OF THE PLURALITY OF USERS, CALCULATE COMFORT LEVEL OVERALL VALUE AND FATIGUE LEVEL OVERALL VALUE OF USERS

906 — IS CALCULATED OVERALL VALUE LESS THAN OR EQUAL TO PRESET OPTIMAL VALUE? — NO

YES

907 — TAKE CALCULATED COMFORT LEVEL OVERALL VALUE AND FATIGUE LEVEL OVERALL VALUE OF USERS AS COMFORT LEVEL OVERALL VALUE AND FATIGUE LEVEL OVERALL VALUE OF USERS

908 — INPUT THE COMFORT LEVEL OVERALL VALUE AND FATIGUE LEVEL OVERALL VALUE INTO FIRST PREDICTION MODEL, AND OUTPUT TARGET TEMPERATURE DISTRIBUTION AND TARGET HUMIDITY DISTRIBUTION FOR AIR CONDITIONING

909 — ACQUIRE SEQUENCE OF TIME-RELATED TEMPERATURE DISTRIBUTION AND SEQUENCE OF TIME-RELATED HUMIDITY DISTRIBUTION BASED ON OUTPUTS OF TEMPERATURE DISTRIBUTION MODEL AND HUMIDITY DISTRIBUTION MODEL WITHIN CERTAIN PERIOD BEFORE CURRENT FIRST TIME

910 — INPUT SEQUENCE OF TIME-RELATED TEMPERATURE DISTRIBUTION AND SEQUENCE OF TIME-RELATED HUMIDITY DISTRIBUTION INTO THIRD PREDICTION MODEL TO ACQUIRE TEMPERATURE DISTRIBUTION AND HUMIDITY DISTRIBUTION AT SECOND TIME AFTER THE CERTAIN PERIOD

911 — INPUT TARGET TEMPERATURE DISTRIBUTION AND TARGET HUMIDITY DISTRIBUTION, AND TEMPERATURE DISTRIBUTION AND HUMIDITY DISTRIBUTION AT SECOND TIME INTO SECOND PREDICTION MODEL, AND OUTPUT TEMPERATURE SETTING VALUE AND HUMIDITY SETTING VALUE FOR AIR CONDITIONING

912 — CONTROL THE AIR CONDITIONING BASED ON TEMPERATURE SETTING VALUE AND HUMIDITY SETTING VALUE FOR AIR CONDITIONING

FIG. 9

```
┌──────────────────────────────────────────────┐
│         ACQUIRE PLURALITY OF ENVIRONMENT       │ ╮ 1001
│    PARAMETERS AT DIFFERENT POSITIONS IN ROOM   │ ╯
└──────────────────────────────────────────────┘
                       │
                       ▼
┌──────────────────────────────────────────────┐
│        DETERMINE ENVIRONMENT PARAMETER         │ ╮ 1002
│   DISTRIBUTION MODEL BASED ON THE PLURALITY OF │ ╯
│      ENVIRONMENT PARAMETERS AT DIFFERENT       │
│                  POSITIONS                     │
└──────────────────────────────────────────────┘
                       │
                       ▼
┌──────────────────────────────────────────────┐
│       DETERMINE PLURALITY OF ENVIRONMENT       │ ╮ 1003
│     PARAMETERS CORRESPONDING TO LOCATED        │ ╯
│   POSITIONS OF PLURALITY OF USERS BASED ON THE │
│    ENVIRONMENT PARAMETER DISTRIBUTION MODEL    │
└──────────────────────────────────────────────┘
                       │
                       ▼
┌──────────────────────────────────────────────┐
│    CALCULATE RESPECTIVE STATE PARAMETERS OF THE│
│        PLURALITY OF USERS BASED ON PLURALITY OF│ ╮ 1004
│       ENVIRONMENT PARAMETERS CORRESPONDING TO  │ ╯
│    LOCATED POSITIONS OF PLURALITY OF USERS, AND│
│  DETERMINE STATE PARAMETER OVERALL VALUE OF USERS│
│     BASED ON STATE PARAMETERS OF THE PLURALITY OF│
│                   USERS                        │
└──────────────────────────────────────────────┘
                       │
                       ▼
┌──────────────────────────────────────────────┐
│    DETERMINE TARGET PARAMETER DISTRIBUTION OF  │ ╮ 1005
│ ENVIRONMENT ADJUSTMENT DEVICE CORRESPONDING TO │ ╯
│    THE STATE PARAMETER OVERALL VALUE BY USING  │
│               LOOKUP TABLE METHOD              │
└──────────────────────────────────────────────┘
                       │
                       ▼
┌──────────────────────────────────────────────┐
│    DETERMINE PARAMETER SETTING VALUE OF        │ ╮ 1006
│ ENVIRONMENT ADJUSTMENT DEVICE CORRESPONDING TO │ ╯
│ THE TARGET PARAMETER DISTRIBUTION BY USING LOOKUP│
│                TABLE METHOD                    │
└──────────────────────────────────────────────┘
                       │
                       ▼
┌──────────────────────────────────────────────┐
│  CONTROL THE ENVIRONMENT ADJUSTMENT DEVICE BASED│ ╮ 1007
│   ON PARAMETER SETTING VALUE OF THE ENVIRONMENT │ ╯
│              ADJUSTMENT DEVICE                 │
└──────────────────────────────────────────────┘
```

# FIG. 10

FIG. 11

1200

CONTROL DEVICE FOR
ENVIRONMENT
ADJUSTMENT DEVICE

1201

ACQUISITION
UNIT

1202

FIRST
DETERMINATION
UNIT

1203

SECOND
DETERMINATION
UNIT

1204

THIRD
DETERMINATION
UNIT

1205

FOURTH
DETERMINATION
UNIT

1206

FIFTH
DETERMINATION
UNIT

1207

CONTROL UNIT

FIG. 12

1300

INTELLIGENT
ENVIRONMENT
ADJUSTMENT SYSTEM

2000

ENVIRONMENT
ADJUSTMENT DEVICE

1200

CONTROL DEVICE FOR
ENVIRONMENT
ADJUSTMENT DEVICE

FIG. 13

## INTERNATIONAL SEARCH REPORT

| International application No. |
| --- |
| **PCT/JP2022/019291** |

**A. CLASSIFICATION OF SUBJECT MATTER**

*H04L 12/28*(2006.01)i
FI: H04L12/28 500E

According to International Patent Classification (IPC) or to both national classification and IPC

**B. FIELDS SEARCHED**

Minimum documentation searched (classification system followed by classification symbols)

H04L12/28

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| Y | WO 2015/122201 A1 (PANASONIC CORP) 20 August 2015 (2015-08-20) paragraphs [0012]-[0062], [0082] | 1-22 |
| Y | WO 2018/179750 A1 (PANASONIC IP MAN CO LTD) 04 October 2018 (2018-10-04) paragraphs [0014]-[0019], [0030], [0031], [0051] | 1-22 |
| Y | WO 2007/066493 A1 (PANASONIC CORP) 14 June 2007 (2007-06-14) paragraphs [0035]-[0043] | 1-22 |
| Y | JP 2020-148385 A (DAIKIN IND LTD) 17 September 2020 (2020-09-17) paragraphs [0024]-[0044] | 1-22 |
| Y | JP 2015-148410 A (TOSHIBA CORP) 20 August 2015 (2015-08-20) paragraphs [0016]-[0024] | 13, 14 |

☐ Further documents are listed in the continuation of Box C.    ☑ See patent family annex.

| * Special categories of cited documents: | |
| --- | --- |
| "A" document defining the general state of the art which is not considered to be of particular relevance | "T" later document published after the international filing date or priority date and not in conflict with the application but cited to understand the principle or theory underlying the invention |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **13 July 2022** | **02 August 2022** |

| Name and mailing address of the ISA/JP | Authorized officer |
| --- | --- |
| **Japan Patent Office (ISA/JP)** 3-4-3 Kasumigaseki, Chiyoda-ku, Tokyo 100-8915 **Japan** | |
| | Telephone No. |

Form PCT/ISA/210 (second sheet) (January 2015)

**INTERNATIONAL SEARCH REPORT**
Information on patent family members

International application No.

**PCT/JP2022/019291**

| Patent document cited in search report | | | Publication date (day/month/year) | Patent family member(s) | | | Publication date (day/month/year) |
|---|---|---|---|---|---|---|---|
| WO | 2015/122201 | A1 | 20 August 2015 | JP 2016-169942 A paragraphs [0012]-[0062], [0081] CN 105339742 A | | | |
| WO | 2018/179750 | A1 | 04 October 2018 | US 2019/0360718 A1 paragraphs [0016]-[0024], [0034], [0035], [0055] CN 110300874 A | | | |
| WO | 2007/066493 | A1 | 14 June 2007 | US 2009/0124926 A1 paragraphs [0052]-[0060] CN 101321993 A KR 10-2008-74129 A | | | |
| JP | 2020-148385 | A | 17 September 2020 | WO 2020/184454 A1 paragraphs [0024]-[0044] CN 113544439 A | | | |
| JP | 2015-148410 | A | 20 August 2015 | WO 2015/118739 A1 paragraphs [0016]-[0024] | | | |

Form PCT/ISA/210 (patent family annex) (January 2015)

31

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 111486554 A